# EUROPÄISCHE PATENTANMELDUNG

(11) **EP 2 549 229 A2**
(43) Veröffentlichungstag der Anmeldung: **23.01.2013**
(21) Anmeldenummer: 12176660.4
(22) Anmeldetag: 17.07.2012
(51) Int. Cl.: G01C 15/00

(54) **Nivelliergerät**

(30) Priorität: 21.07.2011 DE 202011050782 U
(71) Anmelder: wolfcraft GmbH, 56746 Kempenich (DE)
(72) Erfinder: Moog, Christopher, 58422 Wirges (DE); Donner, Andreas, 56727 Mayen (DE)
(74) Vertreter: Grundmann, Dirk

(57) **Zusammenfassung**

Die Erfindung betrifft ein Nivelliergerät mit einem Gehäuse (1), das mittels eines Befestigungsmittels (2, 3) an einer Vertikalfläche, bspw. einer Fliese (4) oder einer Zimmerwand (5) befestigbar ist, mit einer dem Gehäuse (1) zugeordneten Lichtstrahleinrichtung (6) zum Abstrahlen eines auf der Vertikalfläche (4, 5) sich als Linie abzeichnenden Lichtstrahls (7) und mit einer Libelle (8), um das Gehäuse (1) in eine definierte Drehstellung zum Horizont zu bringen, wobei die Libelle (8) einem drehbar dem Gehäuse zugeordneten Libellenträger (9) zugeordnet ist. Das Gehäuse (1) ist mit Hilfe eines reversiblen Haftmittels in beliebigen Drehstellungen und lateralen Positionen an einer Halteplatte (2) befestigbar. Alternativ dazu kann das Gehäuse auch einen rückwärtigen Zapfen (3) tragen, der in ein Bohrloch einsteckbar ist.

## Beschreibung

Die Erfindung betrifft ein Nivelliergerät mit einem Gehäuse, das mittels eines Befestigungsmittels an einer Vertikalfläche, bspw. an einer Fliese einer teilgefliesten Wand oder an einer Zimmerwand befestigbar ist, wobei dem Gehäuse eine Lichtstrahleinrichtung, bspw. in Form eines Halbleiterlasers, zugeordnet ist. Mit dieser Lichtstrahleinrichtung wird ein sich auf der Vertikalfläche als Linie abzeichnender Lichtstrahl erzeugt, entlang dessen Fliesen verlegt werden können oder Bohrlöcher gebohrt werden können. Das Gehäuse trägt einen Libellenträger. Letzterer trägt wiederum eine Libelle. Der Libellenträger ist drehbar am Gehäuse gelagert, um das Gehäuse in eine definierte Drehstellung zum Horizont zu bringen. Der Lichtstrahl kann somit in verschiedene Winkel zur Horizontalen gebracht werden.

Aus der WO 2006/007872 A1 ist ein Nivelliergerät vorbekannt, welches ein Gehäuse mit einer Laserstrahleinrichtung aufweist. Die Laserstrahleinrichtung ist drehbar dem Gehäuse zugeordnet, um den Laserstrahl in verschiedenen Winkeln zum Gehäuse abzustrahlen. Mittels zweier Libellen kann das Gehäuse in eine horizontale Lage gebracht werden. Es ist ein Tragwinkel vorgesehen, auf dem das Gehäuse aufgesetzt werden kann.

Die WO 2006/051528 A2 beschreibt ein Nivelliergerät mit einer Lichtstrahleinrichtung und zwei Libellen, das mittels eines Magneten auf einer ferromagnetischen Unterlage gehalten werden kann.

Die DE 20 2004 020 219 U1 beschreibt ein Lasernivelliergerät mit einem Gehäuse, in dem eine Laserstrahleinrichtung angeordnet ist. Das Gehäuse wird mittels Magnetismus an einem Befestigungssockel gehalten.

Die US 2010/0122466 A1 beschreibt ein Lasernivelliergerät, bei dem ein die Laserstrahleinrichtung aufweisendes Gehäuse drehbar auf einem Adapter montiert ist. Mit Hilfe eines Magneten kann die Vorrichtung von einem ferromagnetischen Träger gehalten werden.

Der Erfindung liegt die Aufgabe zugrunde, das eingangs beschriebene Nivelliergerät gebrauchsvorteilhaft weiterzubilden.

Die Erfindung betrifft ein Nivelliergerät mit einem Gehäuse, das mittels eines Befestigungsmittels an einer Vertikalfläche befestigbar ist, mit einer dem Gehäuse zugeordneten Lichtstrahleinrichtung zum Abstrahlen eines auf der Vertikalfläche sich als Linie abzeichnenden Lichtstrahls, und mit einer Libelle, um das Gehäuse in eine definierte Drehstellung zum Horizont zu bringen, wobei die Libelle einem drehbar dem Gehäuse zugeordneten Libellenträger zugeordnet ist. Gemäß einem ersten Aspekt der Erfindung ist vorgesehen, dass das Gehäuse mit Hilfe eines reversiblen Haftmittels in beliebigen Drehstellungen und an beliebigen lateralen Positionen an einer das Befestigungsmittel ausbildenden Halteplatte befestigt ist. Das reversible Haltemittel kann dabei von einer kurzreichweitigen Kraft oder von mechanischen Kopplungsmitteln ausgebildet sein. Zufolge dieser Ausgestaltung kann das Gehäuse in einer beliebigen Drehstellung auf die Platte aufgesetzt werden. Dies kann an jeder x-beliebigen Position auf der Platte erfolgen. Das reversible Haftmittel kann eine Magnetkraftverbindung sein. Die Halteplatte kann hierzu aus einem ferromagnetischen Material bestehen. Im Gehäuse des Nivelliergeräts sind Magnete angeordnet, die die kurzreichweitige Kraft erzeugen. Bei dieser Variante wird das Gehäuse mit Hilfe eines Magneten an dem aus ferromagnetischen Material gefertigten Befestigungsmittel befestigt. Das reversible Haftmittel kann aber auch eine Klettverbindung sein, bei der elastische Haken in elastische Schlaufen eingreifen. Gemäß einem zweiten Aspekt der Erfindung ist vorgesehen, dass die Rückseite des Gehäuses des Nivelliergerätes eine Aussparung aufweist. In diese Aussparung kann der Kopf eines Zapfens eingesteckt werden, der in ein Bohrloch der Vertikalfläche einsteckbar ist. Es ist aber auch möglich, in diese Aussparung einen Positionierfortsatz eines Gerätes, bspw. eines Maschinenteiles einzusetzen. Gemäß einem weiteren Aspekt der Erfindung ragt von der Rückseite des Gehäuses der Zapfen ab, der in ein Bohrloch der Vertikalfläche einsteckbar ist. Ist das reversible Haftmittel eine Magnetkraftverbindung, so besteht die Platte bevorzugt aus Stahl. Bevorzugt wird die Platte von einem dünnen Stahlblech gebildet. In einer Weiterbildung der Erfindung ist vorgesehen, dass die Platte aus Kunststoff besteht. Bei dieser Variante wird das Nivelliergerät nicht mit Magnetkraft an der Platte gehalten. Es sind andere Kräfte, die das Nivelliergerät an der Platte halten. Beispielsweise kann die Verbindung zwischen Nivelliergerät und Platte über Klettband erfolgen. Die Breitseitenfläche der Platte ist mit einer Vielzahl von Schlaufen oder Haken versehen. Die Unterseite des Nivelliergerätes ist dann mit einer Vielzahl von Haken bzw. Schlaufen versehen, so dass eine Halterung über einen Hakenschlaufeneingriff gewährleistet ist. Bevorzugt weist die Platte zumindest einen Befestigungshaken auf, der über eine obere Randkante einer Fliese hängbar ist. Bevorzugt besitzt die Platte zwei voneinander beabstandete Befestigungshaken, die jeweils von freigeschnittenen und gebogenen Zungen der Platte ausgebildet sind. Die Platte kann rechteckig sein. Die Haken sind dann vorzugsweise zwei sich gegenüberliegenden Rändern zugeordnet. Es können Befestigungsöffnungen in der Platte vorgesehen sein. Handelt es sich bei der Platte um eine rechteckige Platte, so sind die Befestigungsöffnungen vorzugsweise in den Ecken angeordnet. Mittels dieser Befestigungsöffnung kann die Platte mit Hilfe von Nägeln, Nadeln oder Reißzwecken an einer Wand befestigt werden. Bei dieser Benutzungsvariante weisen die Haken von der Wand weg, so dass das Nivelliergerät dann gleichsam an der Rückseite der Platte befestigt ist. Auch hierbei kann die Befestigung über Magnetkraft oder anderweitig erfolgen, bspw. über eine Klettverbindung. Der oben erwähnte Zapfen kann einen Kopf, vorzugsweise einen Mehrkantkopf, aufweisen. Mit diesem Kopf kann der Zapfen lösbar in der Aussparung des Gehäuses eingesteckt werden. Die Aussparung befindet sich vorzugsweise an der Gehäuserückwand, die auch die Magnete aufweisen kann. Die Aufnahme hat auch unabhängig von dem Zapfen eine eigenständige Bedeutung. Beispielsweise kann das Nivelliergerät unter Verwendung dieser Aufnahme an deren Geräten bspw. Sägen oder Fliesenschneider derart befestigt werden, dass der Lichtstrahl in der Schnittlinie liegt. Die Säge bzw. der Fliesenschneider besitzt dann einen Positionierzapfen, der in die unterseitige Öffnung des Nivelliergeräts eintauchen kann. Bei dieser Verwendungsart ist es von besonderem Vorteil, wenn die Öffnung der Gehäuserückwand eine unrunde Querschnittskontur aufweist und der Positionierzapfen des Vorsatzgerätes, bspw. des Fliesenschneiders oder der Säge einen entsprechenden Querschnitt aufweist. Die Magnete können in gehäuseinnenseitigen Kammern einliegen. Gemäß einer bevorzugten Ausgestaltung der Erfindung ist das Gehäuse sowohl mit Magneten als auch mit einem Zapfen ausgestattet. Ferner ist es von Vorteil, wenn die Gehäuserückseite ein Fach, insbesondere ein Batteriefach ausbildet. Dieses Fach kann mit einem Fachdeckel verschlossen sein. Innerhalb des Faches ist nicht nur Raum für eine oder mehrere Batterien zum Betrieb der Lichtstrahleinrichtung. Innerhalb des Fachs kann auch eine Halterung vorgesehen sein, die den Zapfen in einer Nichtgebrauchsstellung hält. Der Kopf des Zapfens wird bevorzugt mit Hilfe von Rastmitteln temporär in der Aussparung gehalten. Der Libellenträger ist der Gehäusefrontseite zugeordnet. Der Libellenträger kann in verschiedene Winkelstellungen, insbesondere jeweils um 45° oder um 30° versetzt liegende Winkelstellungen verrasten. Am Gehäuse oder am Libellenträger können Winkelmarkierungen angeordnet sein. Diese wirken mit einer Zeigermarkierung zusammen. Das Gehäuse kann aus Kunststoff bestehen. Es kann insbesondere zwei Gehäuseschalen aufweisen. Die obere Gehäuseschale kann eine kreisrunde Öffnung aufweisen, in der der Libellenträger drehbar gelagert ist. Die Libelle kann sich diametral über der Drehachse erstrecken. Der Libellenträger bildet eine Schulter aus, die unter dem Rand der Gehäuseschalenöffnung gelagert ist. Die Gehäuseunterschale kann in von der Gehäuseinnenseite zugänglichen Taschen jeweils Magnete tragen. Bevorzugt sind zwei Magnete vorgesehen.

Ein Ausführungsbeispiel der Erfindung wird nachfolgend anhand beigefügter Zeichnungen erläutert. Es zeigen:
- Fig. 1: in einer perspektivischen Darstellung ein Anwendungsbeispiel der Erfindung, wobei eine ein Befestigungsmittel ausbildete Stahlblechplatte 2 mittels rückwärtig abragender Haken 11 über die obere Randkante 4' einer Fliesenreihe 4 gehängt ist und auf ihrer Frontseite mittels Magnetkraft das Nivelliergerät gehalten ist. Der Libellenträger 9 besitzt eine derartige Drehstellung gegenüber dem Gehäuse 1, dass der von der Lichtstrahleinrichtung 6 erzeugte Lichtstrahl 7 vertikal nach unten gerichtet ist,
- Fig. 2: in einer perspektivischen Darstellung die Rückansicht der Befestigungsplatte 2 sowie des Nivelliergerätes 1,
- Fig. 3: eine Draufsicht auf das mit Hilfe der Befestigungsplatte 2 an einem oberen Fliesenrand befestigte Nivelliergerät 1, wobei der Libellenträger 9 eine derartige Drehstellung zum Gehäuse 1 aufweist, dass der Lichtstrahl 7 in Horizontalrichtung gerichtet ist,
- Fig. 4: eine perspektivische Darstellung der Betriebsstellung gemäß Fig. 3,
- Fig. 5: einen Schnitt gemäß der Linie V-V durch das Nivelliergerät,
- Fig. 6: eine Darstellung gemäß Fig. 3, wobei jetzt jedoch der Libellenträger 9 eine derartige Drehstellung zum Gehäuse 1 besitzt, dass der Lichtstrahl 7 in einem 45°-Winkel zur Vertikalen verläuft,
- Fig. 7: eine perspektivische Darstellung des Nivelliergerätes, wobei jetzt in eine rückwärtige Aussparung 13 ein Befestigungszapfen 3 eingesteckt ist,
- Fig. 8: eine rückwärtige perspektivische Darstellung mit dem in die Aussparung 13 eingesteckten Befestigungszapfen 3,
- Fig. 9: eine Seitenansicht mit eingestecktem Befestigungszapfen 3,
- Fig. 10: einen Schnitt gemäß der Linie X-X in Fig. 7,
- Fig. 11: eine Explosionsdarstellung,

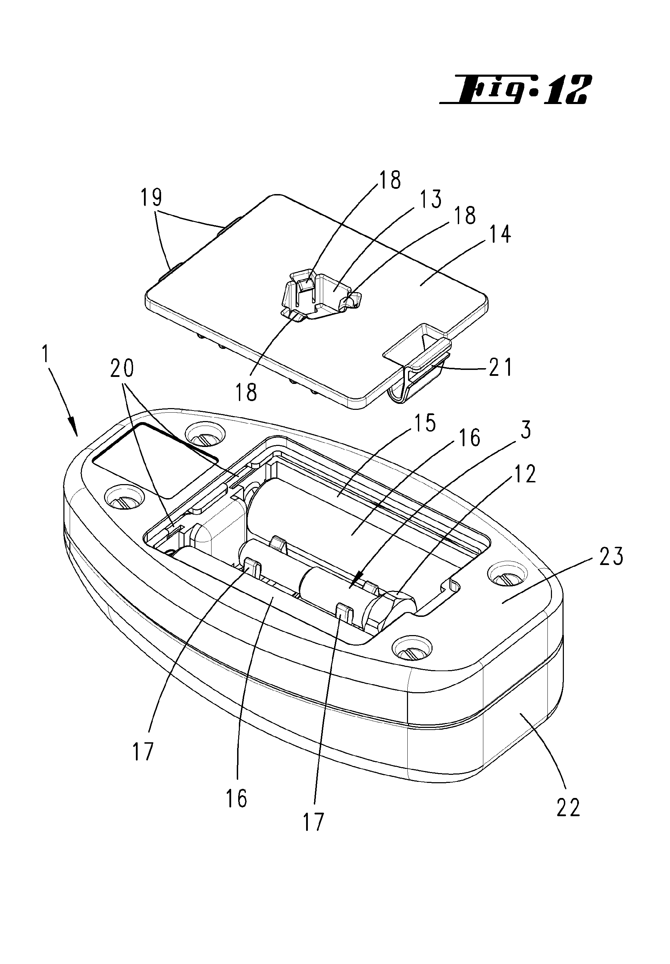

- Fig. 12: die Explosionsdarstellung gem. Fig. 11 jedoch mit im Fach einliegendem Zapfen 3,
- Fig. 13: ein Anwendungsbeispiel eines Nivelliergerätes 1 mit rückwärtig abragendem Zapfen 3, wobei der Lichtstrahl 7 vertikal nach oben weist,
- Fig. 14: ein weiteres Anwendungsbeispiel, wobei der Lichtstrahl in Horizontalrichtung weist und
- Fig. 15: ein Anwendungsbeispiel, bei dem das Nivelliergerät als Schnittlinienmarkierer an einem Fliesenschneider verwendet ist.

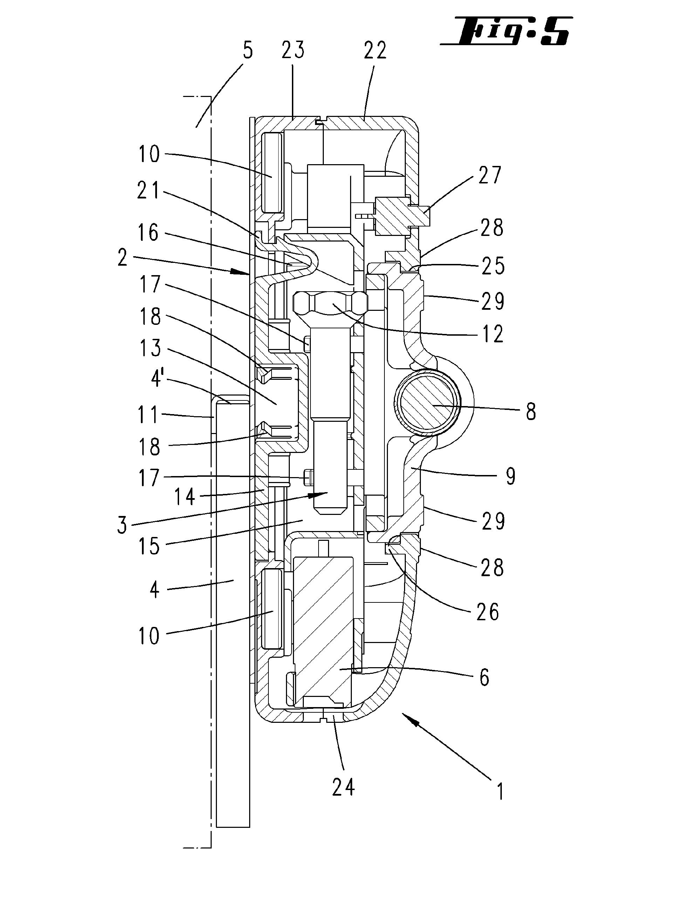

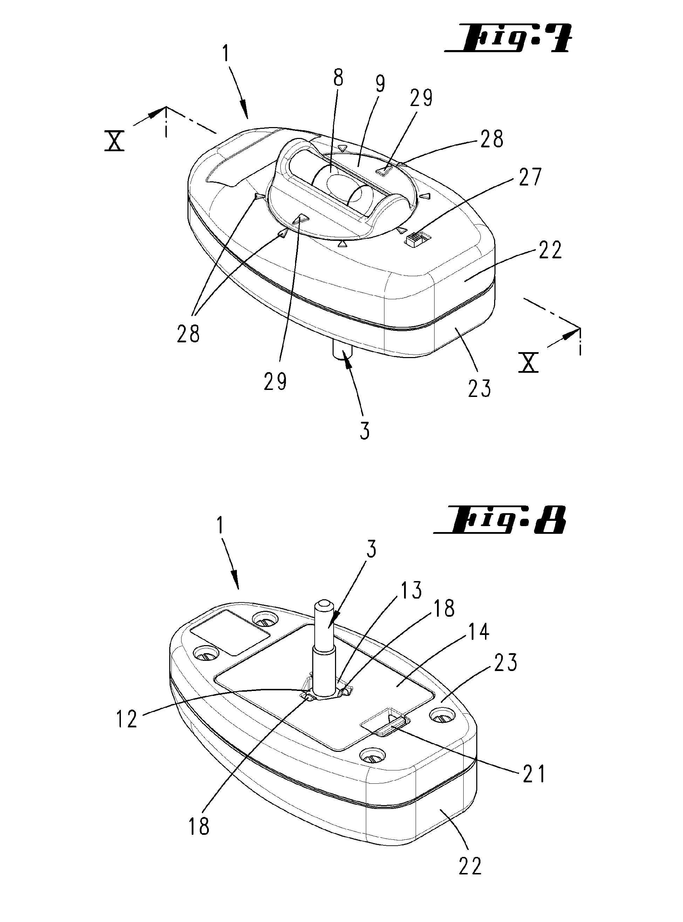

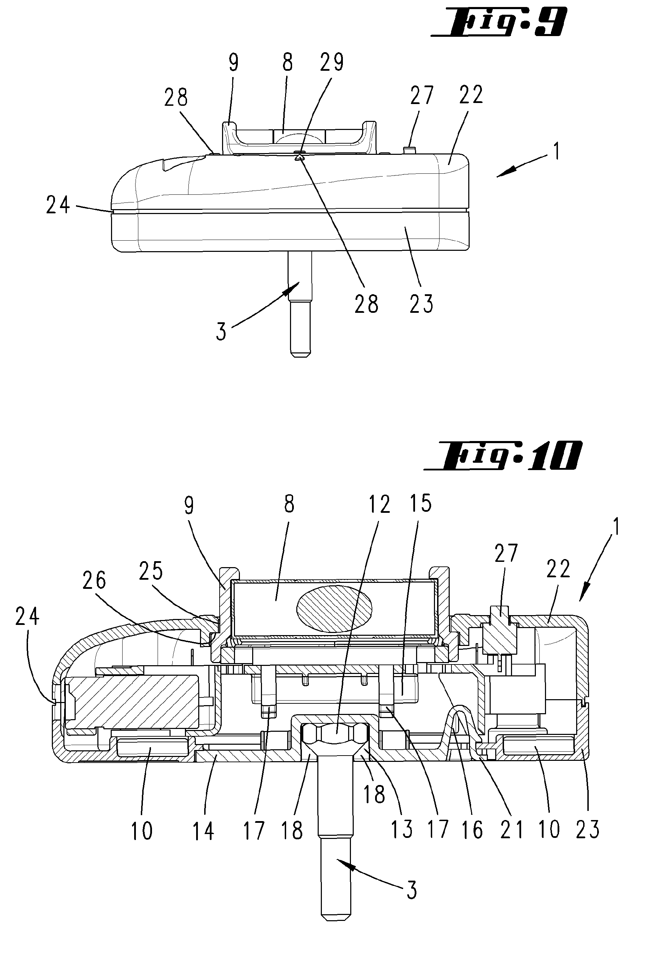

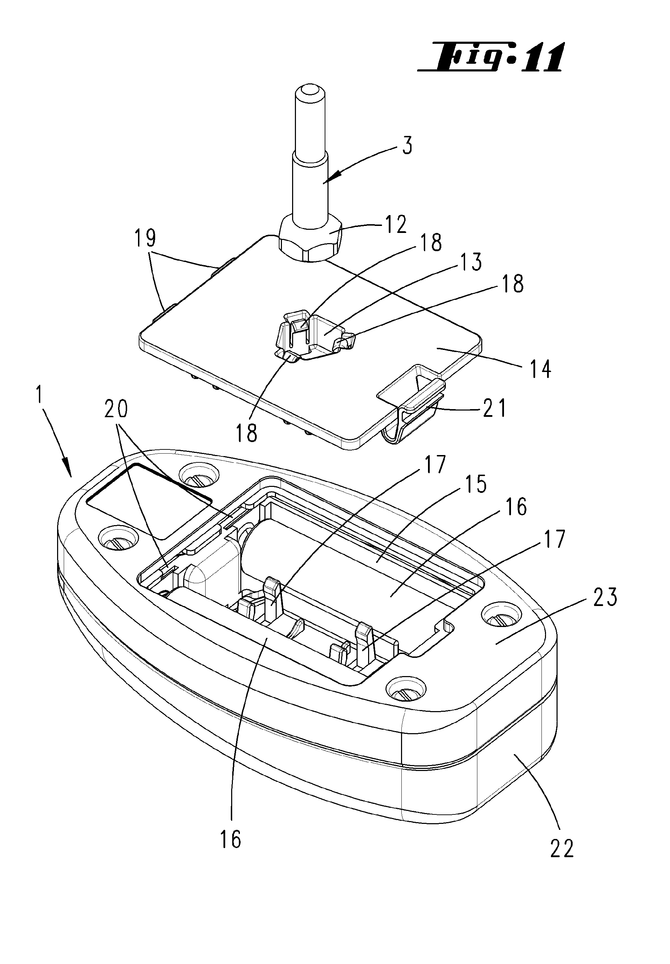

Der Aufbau des Gehäuses des erfindungsgemäßen Nivelliergerätes 1 ergibt sich am Einfachsten aus den Figuren 5, 7, 8, 10 und 11. Das Gehäuse 1 besitzt zwei Gehäuseschalen. Eine Gehäuseoberschale 22 besitzt eine kreisrunde Öffnung mit einem Öffnungsrand 25. In der kreisrunden Öffnung steckt ein eine kreisrunde Umfangskontur aufweisender Libellenträger 9. Der Libellenträger 9 besitzt eine Lagerschulter 26, die unter dem Öffnungsrand 25 liegt. Der Libellenträger 9 ist in der Öffnung der Gehäuseoberschale 22 drehbar gelagert. Er trägt eine Libelle 8, die sich im Wesentlichen über den gesamten Durchmesser des Libellenträgers 9 erstreckt. Es sind zwei Zeigermarkierungen 29 vorgesehen, um die Drehstellung des Libellenträgers 9 gegenüber dem Gehäuse einzustellen. Entlang des Randes der Öffnung trägt die Gehäuseoberseite eine Vielzahl von Winkelmarkierungen 28. Diese können in einem 45°-Abstand oder in einem 30°-Abstand zueinander angeordnet sein. Darüber hinaus sind nicht dargestellte Rastmittel vorgesehen, mittels derer der Libellenträger 9 in vordefinierten Drehstellung verrasten kann. Bevorzugt fallen diese vordefinierten Drehstellungen mit den Winkelmarkierungen 28 zusammen.

Durch eine weitere Öffnung der Gehäuseoberschale 22 ragt ein Schalter 27, mit dem eine innerhalb des Gehäuses 1 angeordnete Lichtstrahleinrichtung 6 in Betrieb gesetzt werden kann. Bei der Lichtstrahleinrichtung 6 handelt es sich um einen Halbleiterlaser, der einen Laserstrahl 7 erzeugt, der mit einer Gehäuselängserstreckungsachse zusammenfällt. Der Laserstrahl 7 ist so aufgefächert, dass er auf einer Vertikalebene, auf die das Gehäuse 1 aufgesetzt ist, eine Lichtlinie darstellt.

Der Rand der Gehäuseoberschale 22 besitzt eine Passfeder, die in eine Nut des Randes einer Gehäuseunterschale 23 eingreift. Die Gehäuseunterschale 23 besitzt zwei von der Gehäuseinnenseite zugängliche Fächer, in denen jeweils ein kreisscheibenförmiger Magnet 10 eingepresst oder eingeklebt ist.

Die Gehäuseunterschale 23 besitzt darüber hinaus ein Fach 15, welches zur Aufnahme von Batterien 16 dient. Im Ausführungsbeispiel liegen im Fach 15 zwei Batterien 16, die parallel zueinander angeordnet sind und zwischen sich einen Abstandsfreiraum belassen. In diesem Abstandsfreiraum befindet sich eine Halterung 17 zur Aufnahme eines Zapfens 3. Der Fachdeckel 14 besitzt an einem seiner Randkanten Scharnierstege 19, die im geschlossenen Zustand des Fachdeckels 14 in Öffnungen 20 der Gehäuseunterschale eingreifen. Auf der den Scharnierstegen 19 gegenüberliegenden Randkante besitzt der Fachdeckel 14 eine U-förmig ausgebildete Federzunge, die eine Verschlussfeder 21 ausbildet. Die beiden Gehäuseschalen 22, 23 sind mittels vier Schrauben miteinander verbunden.

Etwa in der Mitte des Fachdeckels 14 befindet sich eine Aussparung 13, in die der eine Sechskantumrisskontur aufweisende Kopf 12 des Zapfens 3 eingesteckt werden kann. Innerhalb der Aussparung 13 sind Federzungen 18 vorgesehen, die an ihren freien Enden hakenartige Vorsprünge aufweisen, die den in die Aussparung 13 eingesetzten Kopf übergreifen, so dass der Zapfen 3 innerhalb der Aussparung 13 über eine Rast gehalten ist. In der Nichtgebrauchsstellung kann der Zapfen 3 in die im Fach 15 vorgesehene Halterung 17 eingesetzt werden, die im Wesentlichen aus zwei gabelförmigen Haltezungenanordnungen besteht.

Die in der Gehäuseunterseite 13 angeordnete unrunde Öffnung hat auch unabhängig vom Zapfen 3 eine Funktion. Mit Hilfe dieser Öffnung kann das Nivelliergerät an einem Vorsatzgerät, bspw. an einer Kappsäge oder einem Fliesenschneider befestigt werden. Dieses Vorsatzgerät besitzt einen Positionierzapfen 32, auf dem die Unterseite des Nivelliergerätes 1 mit der Aussparung 13 aufgesetzt werden kann. Besitzt der Positionierzapfen 32 eine unrunde, insbesondere mehrkantförmige Querschnittskontur, die an die Querschnittskontur der Aussparung 13 angepasst ist, braucht das Nivelliergerät lediglich auf dem Positionierzapfen aufgesetzt werden, sofern vorher eine Winkeljustage stattgefunden hat. Der Lichtstrahl weist dann in eine Richtung, die mit der Schnittlinie der Säge oder des Fliesenschneiders übereinstimmt.

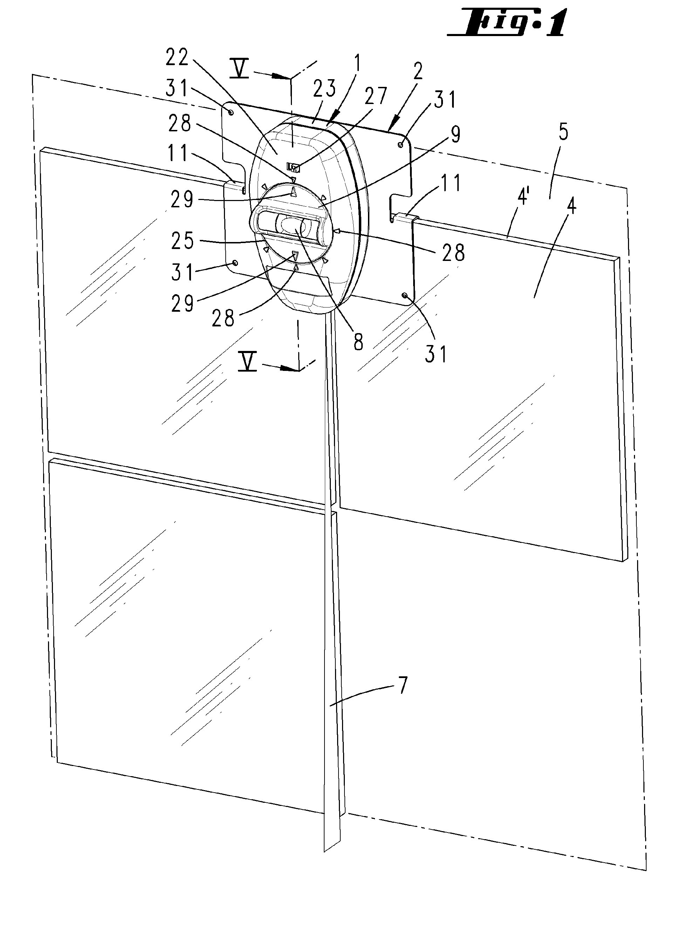

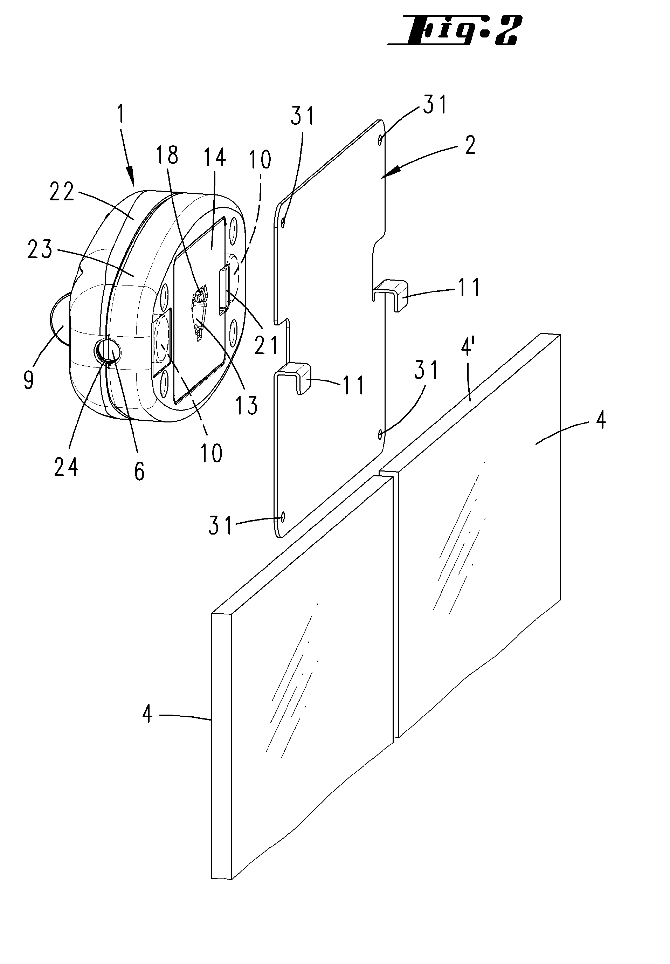

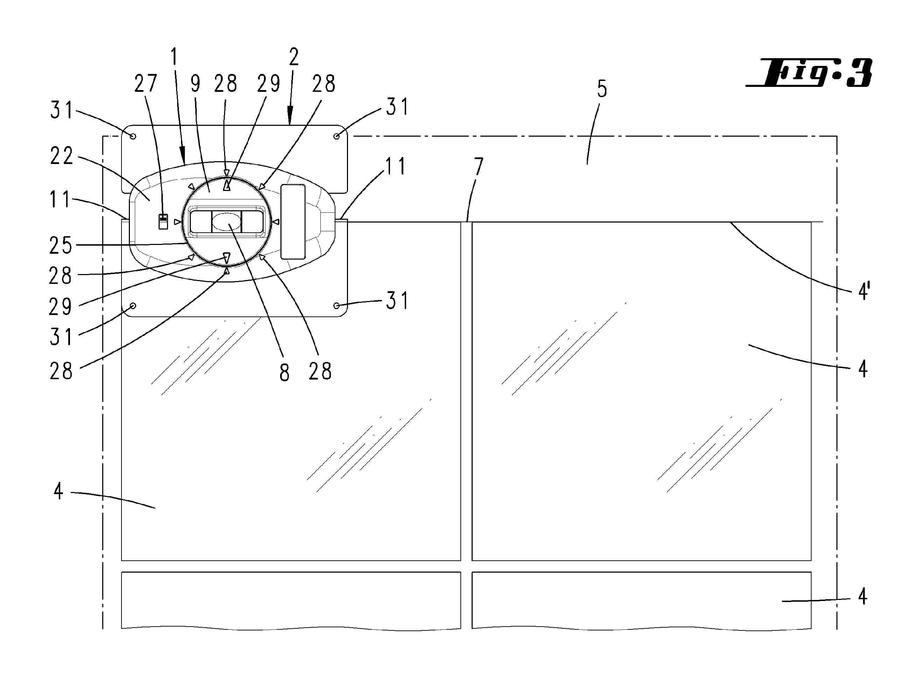

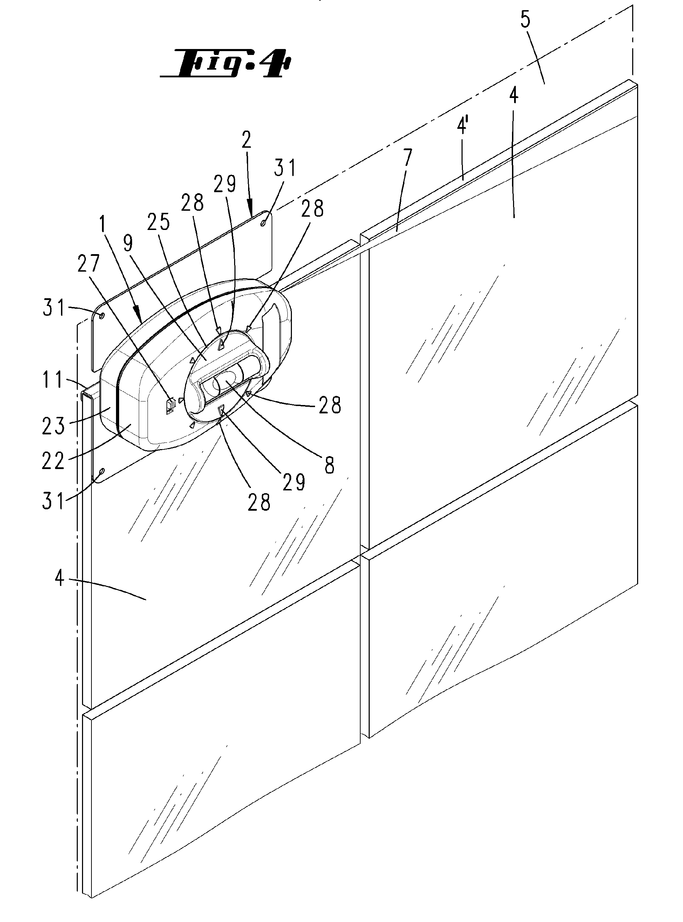

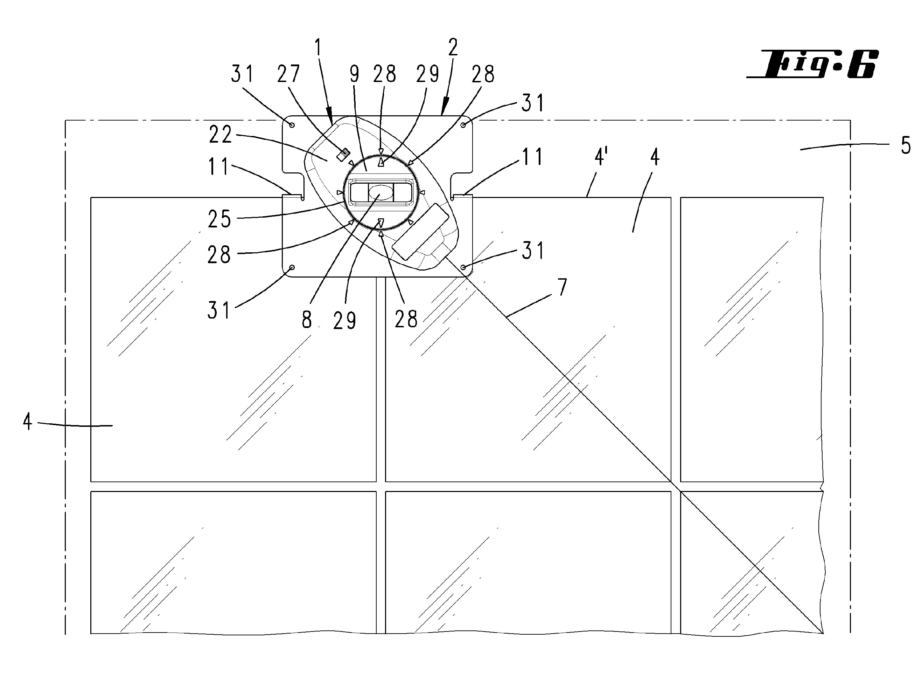

Die Funktionsweise des Nivelliergerätes ist die Folgende:
In einer ersten Funktionsvariante, die in den Figuren 1 bis 6 dargestellt ist, wird das Nivelliergerät 1 zusammen mit einer aus einem Stahlblech gefertigten Befestigungseinrichtung 2 verwendet. Das Stahlblech besitzt eine im Wesentlichen rechteckige Umrisskontur. In zwei sich gegenüberliegenden Schmalseiten sind L-förmige Schlitze eingeschnitten. Hierdurch sind Zungen freigeschnitten, die jeweils zu einem U-förmigen Haken 11 gebogen sind. Mit diesen beiden, voneinander beabstandeten Haken 11 kann die Befestigungsplatte 2 über die obere Randkante 4' einer Fliesenreihe 4 gehängt werden. Der Libellenträger 9 kann in verschiedene Drehstellungen gegenüber dem Gehäuse gebracht werden. Das Gehäuse 1 haftet mit Hilfe der von den Magneten 10 ausgebildeten Magnetkraft an der Breitseitenfläche der Befestigungsplatte 2. Es ist entlang der Befestigungsplatte 2 verschieblich und kann gedreht werden, bis die Libelle ihre Horizontallage erreicht hat. Dann weist der von der Laserstrahleinrichtung 6 erzeugte Laserstrahl 7 entweder nach unten (Fig. 1) oder zur Seite (Figuren 3 und 4) oder in einer Schrägrichtung (Figur 6). Der Laserstrahl 7 ist so aufgefächert, dass er auf der Vertikalebene eine Lichtlinie erzeugt, entlang der die weiter zu verlegenden Fliesen ausgerichtet werden können.

Die Platte 2 besitzt an ihren vier Ecken Bohrungen 31, mit denen die Platte auch anderweitig an einer Wand 5 befestigt werden kann. Bei dieser Art der Befestigung der Platte 2 an einer Wand 5 ragen die Haken 11 von der Wand ab. Das Nivelliergerät wird bei dieser Montageart quasi an der Plattenrückwand befestigt. Die Befestigung kann mittels Nägeln, Schrauben, Nadeln oder Reißzwecken erfolgen, die durch die Bohrungen 31 gesteckt werden und mit denen die Platte 2 an der Wand befestigt werden kann.

Bei einem nicht dargestellten Ausführungsbeispiel erfolgt die Befestigung des Nivelliergerätes 1 mit der Platte 2 nicht über Magneten, sondern über eine Klettverbindung. Bei dieser Art der Verbindung greifen elastische Häkchen einer Befestigungsfläche in kleine elastische Schlaufen einer anderen Befestigungsfläche. Beispielsweise kann die Unterseite des Gehäuses 1 mit Häkchen versehen sein und die Oberflächen der Platte 2 können mit einer Vielzahl von Schlaufen ausgebildet sein. Auch bei dieser Variante lässt sich das Gehäuse 1 in einer beliebigen Drehstellung gegenüber der Platte 2 an jeder Oberflächenstelle an der Platte 2 befestigen.

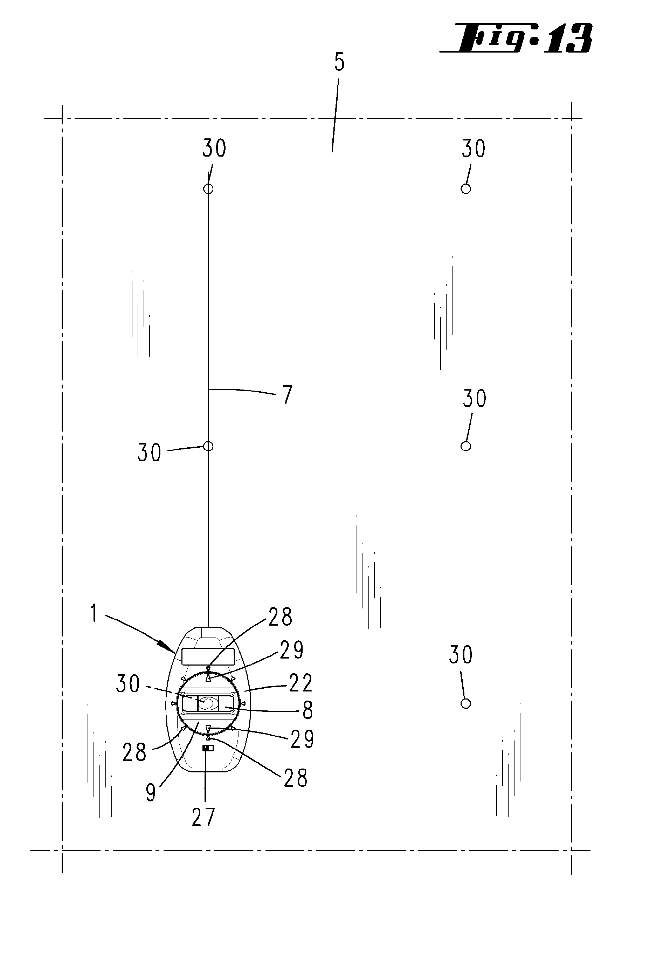

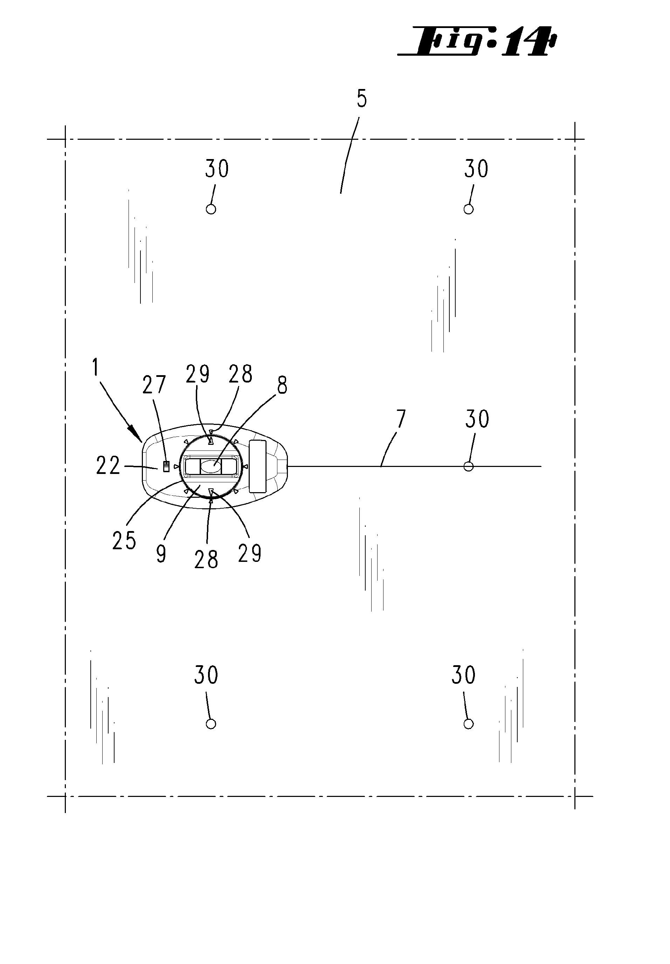

Bei der in den Figuren 13 und 14 dargestellten Ausführungsvariante ragt von der Rückseite des Gehäuses 1 der Befestigungszapfen 3 ab. Der Befestigungszapfen 3 weist einen Schaft auf, der Abschnitte unterschiedlichen Durchmessers aufweist. Dem Kopf 12 benachbart ist zunächst ein Abschnitt mit einem größeren Durchmesser angeordnet. Dieser geht zum anderen Ende des Zapfens 3 in einen Abschnitt mit einem geringeren Durchmesser über.

Der von der Gehäuserückseite abragende Zapfen kann in ein erstes in einer Vertikalwand eingebrachtes Bohrloch eingesetzt werden. Weist bspw. der Laserstrahl 7 wie in der Fig. 13 dargestellt nach oben, so wird auf der Vertikalfläche eine sich in Vertikalrichtung erstreckende Linie erzeugt, in der weitere Bohrungen bspw. zum Aufhängen eines Regals gebohrt werden können. Durch eine Drehung der Libelle um 90° kann der Lichtstrahl 7 in Horizontalrichtung weisen, um ebenfalls die Lage weiterer Bohrungen 30 anzugeben. Zu diesem Zwecke liegt die Aussparung 13 in der Gehäusemitte, durch die auch die Drehachse des Libellenträgers 9 verläuft. Durch die Drehachse des Libellenträgers 9 bzw. die Achse des Zapfens 3 verläuft auch die optische Achse der Laserstrahleinrichtung 6, so dass der von der Laserstrahleinrichtung 6 erzeugte Lichtstrahl 7 in einer Richtung verläuft, die durch die Drehachse des Libellenträgers 9 bzw. die Achse des Zapfens 3 verläuft.

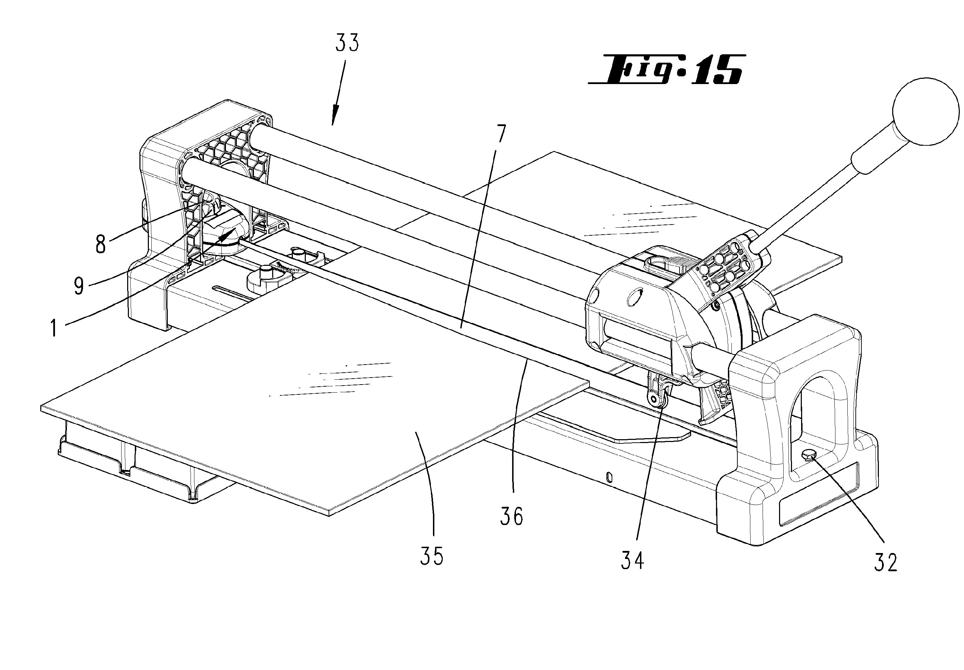

Die Figur 15 zeigt ein Anwendungsbeispiel, bei dem das Nivelliergerät 1 als Schnittlinienanzeiger verwendet wird. Es handelt sich dabei um einen Fliesenschneider 33, der eine Grundplatte aufweist, auf die ein Werkstück 35 gelegt werden kann. An einem Schlitten, der entlang einer Führung verschoben werden kann, befindet sich ein Schneidrad 34, das entlang der Schnittlinie über das Werkstück 35 geschoben werden kann. Das Gehäuse bildet Positioniervorsprünge 32 aus, auf die das Nivelliergerät 1 derart aufgesetzt werden kann, dass der Lichtstrahl 7 entlang der Schnittlinie 36 verläuft. Die Führung wird von zwei Schienen ausgebildet, die an ihren beiden Enden mit Halteelementen mit der Grundplatte verbunden sind. An den Halteelementen befinden sich Öffnungen. Aus dem Boden jeder der beiden Öffnungen entspringt ein Positioniervorsprung mit einem Sechskantgrundriss. In der Fig. 15 ist lediglich ein derartiger Positioniervorsprung 32 dargestellt. Auf dem anderen, nicht sichtbaren Positioniervorsprung 32 ist das Nivelliergerät 1 aufgesetzt.

Das Gehäuse 1 kann auch mit anderen geeigneten Mitteln mit dem Untergrund, bspw. einer Fliese oder mit der Halteplatte 2 verbunden werden, bspw. kann sich auf der Rückseite des Gehäuses 1 mindestens ein Saugnapf befinden, mit dem das Gehäuse an einen Untergrund, bspw. einer Fliese oder aber auch an der Halteplatte befestigt werden kann. Die Halteplatte besteht bevorzugt zwar aus einem ferromagnetischen Material und ist insbesondere als aus Stahl bestehendes Stanzbiegeteil gefertigt. Die Halteplatte 2 kann aber auch aus Kunststoff gefertigt sein und auf ihrer von der das Gehäuse 1 tragenden Seite wegweisenden Seite ein oder mehrere Saugnäpfe aufweisen. Mit dem mindestens einen Saugnapf, der an der Halteplatte 2 befestigt ist, kann die Halteplatte an einer Fliese oder dergleichen befestigt werden. Die in den Zeichnungen dargestellten Haken 11 können dann entfallen. Die Verbindung zwischen Gehäuse 1 und Halteplatte 2 kann aber der Weise erfolgen, wie sie in den Zeichnungen dargestellt ist. Erfolgt die Verbindung zwischen Gehäuse 1 und Halteplatte 2 über einen Magneten, so ist auch die mit Saugnäpfen versehene Halteplatte 2 aus ferromagnetischem Material.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Gehäuse
- 2: Stahlplatte
- 3: Zapfen
- 4: Fliese
- 4': Randkante
- 5: Wand
- 6: Lichtstrahleinrichtung
- 7: Lichtstrahl
- 8: Libelle
- 9: Libellenträger
- 10: Magnet
- 11: Haken
- 12: Kopf des Zapfens
- 13: Aussparung
- 14: Batteriefachdeckel
- 15: Batteriefach
- 16: Batterie
- 17: Halterung für Zapfen
- 18: Federzungen
- 19: Scharniersteg
- 20: Öffnung
- 21: Verschlussfeder
- 22: Gehäuseoberschale
- 23: Gehäuseunterschale
- 24: Lichtaustrittsöffnung
- 25: Öffnungsrand
- 26: Lagerschulter
- 27: Schalter
- 28: Winkelmarkierung
- 29: Zeigermarkierung
- 30: Bohrloch
- 31: Bohrung
- 32: Positioniervorsprung
- 33: Fliesenschneider
- 34: Schneidrad
- 35: Werkstück
- 36: Schnittlinie

## Patentansprüche

1. Nivelliergerät mit einem Gehäuse (1), das mittels eines Befestigungsmittels (2, 3) an einer Vertikalfläche, bspw. einer Fliese (4) oder einer Zimmerwand (5) befestigbar ist, mit einer dem Gehäuse (1) zugeordneten Lichtstrahleinrichtung (6) zum Abstrahlen eines auf der Vertikalfläche (4, 5) sich als Linie abzeichnenden Lichtstrahls (7) und mit einer Libelle (8), um das Gehäuse (1) in eine definierte Drehstellung zum Horizont zu bringen, wobei die Libelle (8) einem drehbar dem Gehäuse zugeordneten Libellenträger (9) zugeordnet ist, **dadurch gekennzeichnet, dass** das Gehäuse (1) mit Hilfe eines reversiblen Haftmittels in beliebigen Drehstellungen und lateralen Positionen an einer das Befestigungsmittel ausbildenden Halteplatte (2) befestigbar ist.

2. Nivelliergerät mit einem Gehäuse (1), das mittels eines Befestigungsmittels (2, 3) an einer Vertikalfläche, bspw. einer Fliese (4) oder einer Zimmerwand (5) befestigbar ist, mit einer dem Gehäuse (1) zugeordneten Lichtstrahleinrichtung (6) zum Abstrahlen eines auf der Vertikalfläche (4, 5) sich als Linie abzeichnenden Lichtstrahls (7) und mit einer Libelle (8), um das Gehäuse (1) in eine definierte Drehstellung zum Horizont zu bringen, wobei die Libelle (8) einem drehbar dem Gehäuse zugeordneten Libellenträger (9) zugeordnet ist, **dadurch gekennzeichnet, dass** das Befestigungsmittel ein rückwärtig vom Gehäuse (1) abragender Zapfen (3) ist, der in ein Bohrloch in der Vertikalfläche (4, 5) einsteckbar ist.

3. Nivelliergerät mit einem Gehäuse (1), das mittels eines Befestigungsmittels (2, 3) an einer Vertikalfläche, bspw. einer Fliese (4) oder einer Zimmerwand (5) befestigbar ist, mit einer dem Gehäuse (1) zugeordneten Lichtstrahleinrichtung (6) zum Abstrahlen eines auf der Vertikalfläche (4, 5) sich als Linie abzeichnenden Lichtstrahls (7) und mit einer Libelle (8), um das Gehäuse (1) in eine definierte Drehstellung zum Horizont zu bringen, wobei die Libelle (8) einem drehbar dem Gehäuse zugeordneten Libellenträger (9) zugeordnet ist, **dadurch gekennzeichnet, dass** eine Rückseite des Gehäuses (1) eine Aussparung (13) aufweist, zur Aufnahme des Kopfes eines Zapfens (3) bzw. eines Positioniervorsprungs (32).

4. Nivelliergerät nach Anspruch 1 oder insbesondere danach, **dadurch gekennzeichnet, dass** die reversiblen Haftmittel von einer Magnetkraftverbindung ausgebildet ist, wobei die Halteplatte (2) aus einem ferromagnetischen Material besteht und im Gehäuse (1) Magnete (10) angeordnet sind, oder von einer Klettverbindung zwischen der Rückseite des Gehäuses (1) und der Halteplatte oder als Saugnapf ausgebildet sind.

5. Nivelliergerät nach den Ansprüchen 1, 4 oder 5 oder insbesondere danach, dass die Halteplatte (2) einen Befestigungshaken (11) aufweist, der über eine obere Randkante (4') einer Fliese (4) hängbar ist, wobei insbesondere zwei voneinander beabstandete Haken (11) jeweils von freigeschnittenen und gebogenen Zungen der Platte (2) gebildet sind oder die Platte (2) im Wesentlichen rechteckig ist und die Haken (11) zwei sich gegenüberliegenden Rändern der Platte (2) zugeordnet sind.

6. Nivelliergerät nach einem oder mehreren der vorhergehenden Ansprüche oder insbesondere danach, **dadurch gekennzeichnet, dass** die Halteplatte (2) mindestens einen Saugnapf trägt, mit der sie am Untergrund, insbesondere an einer Fliese befestigbar ist.

7. Nivelliergerät nach einem oder mehreren der vorhergehenden Ansprüche oder insbesondere danach, **dadurch gekennzeichnet, dass** die Halteplatte (2) insbesondere in ihren Ecken Bohrungen (31) aufweist, mit denen die Platte (2) unter Verwendung von Nägeln, Nadeln, Reißzwecken oder dergleichen an der Wand (5) befestigbar ist.

8. Nivelliergerät nach einem oder mehreren der vorhergehenden Ansprüche oder insbesondere danach, **dadurch gekennzeichnet, dass** der Zapfen (3) einen Kopf (12) aufweist, der lösbar in eine Aussparung (13) des Gehäuses (1) einsteckbar ist.

9. Nivelliergerät nach einem oder mehreren der vorhergehenden Ansprüche oder insbesondere danach, **dadurch gekennzeichnet, dass** der Grundriss der Aussparung (13) unrund und insbesondere mehrkantig ausgebildet ist.

10. Nivelliergerät nach einem oder mehreren der vorhergehenden Ansprüche oder insbesondere danach, **dadurch gekennzeichnet, dass** die Aussparung (13) Federzungen (18) aufweist, um dem Kopf (12) bzw. den Positioniervorsprung (32) in der Aussparung (13) zu fesseln.

11. Nivelliergerät nach einem oder mehreren der vorhergehenden Ansprüche oder insbesondere danach, **dadurch gekennzeichnet, dass** die Rückseite des Gehäuses (1) ein Fach, insbesondere ein Batteriefach (15) aufweist, welches mit einem Fachdeckel (14) verschlossen ist.

12. Nivelliergerät nach einem oder mehreren der vorhergehenden Ansprüche oder insbesondere danach, **dadurch gekennzeichnet, dass** die Aussparung (13) in dem Fachdeckel (14) angeordnet ist.

13. Nivelliergerät nach einem oder mehreren der vorhergehenden Ansprüche oder insbesondere danach, **dadurch gekennzeichnet, dass** das Fach (14) eine Halterung (17) aufweist zur Halterung des Zapfens (3) in seiner Nichtgebrauchsstellung.

14. Nivelliergerät nach einem oder mehreren der vorhergehenden Ansprüche oder insbesondere danach, **dadurch gekennzeichnet, dass** das Gehäuse (1) aus zwei Gehäuseschalen (22, 23) besteht, wobei die Gehäuseoberschale (22) eine kreisrunde Öffnung aufweist, in der der Libellenträger (9) drehbar einliegt und die Gehäuseunterschale (23) in von der Gehäuseinnenseite zugänglichen Taschen Magnete (10) trägt sowie das vom Fachdeckel (14) verschlossene Fach (15) ausbildet.

15. Nivelliergerät nach einem oder mehreren der vorhergehenden Ansprüche oder insbesondere danach, **dadurch gekennzeichnet, dass** die Lichtstrahleinrichtung (6) von einem Halbleiterlaser ausgebildet ist, der einen Laserstrahl (7) erzeugt, der das Gehäuse durch eine Lichtaustrittsöffnung (24) verlässt.
